# EUROPEAN PATENT APPLICATION

(11) **EP 2 802 172 A2**
(43) Date of publication of application: **12.11.2014**
(21) Application number: 12732081.0
(22) Date of filing: 10.02.2012
(51) Int. Cl.: H04W 36/08

(54) **RE-TRANSMISSION CONTROL METHOD, COMMUNICATION SYSTEM, AND DEVICE**

(71) Applicant: Huawei Technologies Co., Ltd., Shenzhen, Guangdong 518129 (CN)
(72) Inventor: YANG, Dongli, Shenzhen Guangdong 518129 (CN)
(74) Representative: Pfenning, Meinig & Partner GbR
(86) International application number: PCT/CN2012/071022
(87) International publication number: WO 2012/092898

(57) **Abstract**

A retransmission control method, a communications system, and a device are disclosed. The retransmission control method includes: sending, by a media access control entity of a base station, a media access control protocol data unit to a terminal in a hybrid automatic repeat request process, where content of the media access control protocol data unit includes a handover command message; receiving, by the media access control entity of the base station, a hybrid automatic repeat request acknowledgment message, which is sent by the terminal in a hybrid automatic repeat request process; and if the hybrid automatic repeat request process in which the media access control entity of the base station sends the media access control protocol data unit is the same as the hybrid automatic repeat request process in which the terminal sends the hybrid automatic repeat request acknowledgment message, notifying a radio link control entity of the base station of stopping sending the handover command message. In this way, air interface resources can be saved.

## Description

### TECHNICAL FIELD

The present invention relates to the field of mobile communications, and in particular, to a retransmission control method, a communications system, and a device.

### BACKGROUND

In a Long Term Evolution (Long Term Evolution, LTE) system, to offset the impact of radio channel time-varying and multi-path fading on signal transmission, a hybrid automatic repeat request (Hybrid Automatic Repeat Request, HARQ) technology is introduced to the media access control (Media Access Control, MAC) layer. The HARQ technology can improve reliability of signal transmission, and has become one of key indispensable technologies in the LTE system.

In the LTE system, retransmission of a handover command message can be implemented by using the HARQ technology, so as to ensure that the handover command message can be successfully received by a user equipment (User Equipment, UE). A conventional method for retransmitting a handover command may be briefly described as follows: A UE sends a measurement report (RRC_MEAS_RPRT) to a base station (evolved Node Base Station, eNB) of a serving cell, so as to trigger the eNB to start a UE handover, where the measurement report indicates that signal strength of a target cell is better than signal strength of the serving cell; the eNB sends a handover command message (HO_CMD) to a radio link control (Radio Link Control, RLC) entity of the eNB; the RLC entity of the eNB encapsulates the handover command message into an RLC protocol data unit (Protocol Data Unit, PDU) and sends the RLC PDU to a MAC entity of the eNB; the MAC entity of the eNB encapsulates the RLC PDU into a MAC PDU and delivers the MAC PDU to a MAC entity of the UE in a HARQ process; the MAC entity of the UE decapsulates the MAC PDU into the RLC PDU, sends the RLC PDU to an RLC entity of the UE, and sends an acknowledgment (ACK) message to the MAC entity of the eNB in the HARQ process; the RLC entity of the UE decapsulates the RLC PDU into the handover command message and sends the handover command message to the UE; and the UE triggers a handover to the target cell. In the method for retransmitting a handover command, the RLC entity of the eNB cannot learn whether the UE successfully receives the handover command message. Therefore, to ensure that the handover command message can be successfully received by the UE, the RLC entity of the eNB needs to repeatedly send the RLC PDU to the MAC entity of the eNB (where this process is also referred to as automatic repeat request (Automatic Repeat Request, ARQ) retransmission). Each AQR retransmission of the RLC entity of the eNB causes the MAC entity of the eNB to encapsulate the RLC PDU again into the MAC PDU and send the MAC PDU to the MAC entity of the UE through an air interface by using the HARQ process (where this process is also referred to as HARQ retransmission).

In practice, it is found that in the foregoing method for retransmitting a handover command, even though the handover command message is successfully received by the UE, the RLC entity of the eNB still triggers the ARQ retransmission of the RLC entity of the eNB, and then the ARQ retransmission causes the HARQ retransmission of the MAC entity of the eNB, which seriously consumes system air interface resources.

### SUMMARY

Embodiments of the present invention provide a retransmission control method, a communications system, and a device, which can save system air interface resources.

One aspect of the present invention provides a retransmission control method, including:
sending, by a media access control entity of a base station, a media access control protocol data unit to a terminal in a hybrid automatic repeat request process, where content of the media access control protocol data unit includes a handover command message;
receiving, by the media access control entity of the base station, a hybrid automatic repeat request acknowledgment message, which is sent by the terminal in a hybrid automatic repeat request process; and
if the hybrid automatic repeat request process in which the media access control entity of the base station sends the media access control protocol data unit is the same as the hybrid automatic repeat request process in which the terminal sends the hybrid automatic repeat request acknowledgment message, notifying a radio link control entity of the base station of stopping sending the handover command message.

Another aspect of the present invention provides a retransmission control method, including:
sending, by a radio link control entity of a base station, a handover command message to a media access control entity of the base station;
receiving, by the radio link control entity of the base station, a first notification message sent by the media access control entity of the base station, where the first notification message is used to instruct the radio link control entity of the base station to stop sending the handover command message; and
stopping, by the radio link control entity of the base station, sending the handover command message.

One aspect of the present invention provides a base station, where the base station includes a media access control entity and a radio link control entity, where the media access control entity includes:
a sending unit, configured to send a media access control protocol data unit to a terminal in a hybrid automatic repeat request process, where content of the media access control protocol data unit includes a handover command message;
a receiving unit, configured to receive a hybrid automatic repeat request acknowledgment message, which is sent by the terminal in a hybrid automatic repeat request process; and
a processing unit, configured to: when the hybrid automatic repeat request process in which the media access control protocol data unit is sent is the same as the hybrid automatic repeat request process in which the terminal sends the hybrid automatic repeat request acknowledgment message, trigger the sending unit to notify the radio link control entity of stopping sending the handover command message; where
the sending unit is further configured to: when triggered by the processing unit, notify the radio link control entity of stopping sending the handover command message.

One aspect of the present invention provides a base station, where the base station includes a media access control entity and a radio link control entity, where the radio link control entity includes:
a sending unit, configured to send a handover command message to the media access control entity;
a receiving unit, configured to receive a first notification message sent by the media access control entity, where the first notification message is used to instruct the radio link control entity to stop sending the handover command message; and
a control unit, configured to: when the receiving unit receives the first notification message, control the sending unit to stop sending the handover command message.

One aspect of the present invention provides a communications system, including a base station and a terminal, where a media access control entity of the base station is configured to send a media access control protocol data unit to the terminal in a hybrid automatic repeat request process, where content of the media access control protocol data unit includes a handover command message; receive a hybrid automatic repeat request acknowledgment message, which is sent by the terminal in a hybrid automatic repeat request process; and if the hybrid automatic repeat request process in which the media access control protocol data unit is sent is the same as the hybrid automatic repeat request process in which the terminal sends the hybrid automatic repeat request acknowledgment message, notify a radio link control entity of the base station of stopping sending the handover command message.

Another aspect of the present invention provides a communications system, including a base station and a terminal, where a radio link control entity of the base station is configured to send a handover command message to a media access control entity of the base station; receive a first notification message sent by the media access control entity of the base station, where the first notification message is used to instruct the radio link control entity to stop sending the handover command message; and stop sending the handover command message.

In the foregoing technical solutions, after determining that the HARQ process in which the MAC PDU is sent is the same as the HARQ process in which a UE sends the HARQ acknowledgment message, the MAC entity of the eNB notifies the RLC entity of the eNB of stopping sending the handover command message, so that the RLC entity of the eNB can stop ARQ retransmission. In the foregoing technical solutions, ARQ retransmission between the RLC entity of the eNB and the MAC entity of the eNB can be reduced, so that HARQ retransmission between the MAC entity of the eNB and a MAC entity of the UE, which is caused by the ARQ retransmission, can be reduced, and thereby system air interface resources are effectively saved.

### BRIEF DESCRIPTION OF DRAWINGS

To describe the technical solutions in the embodiments of the present invention or in the prior art more clearly, the following briefly introduces the accompanying drawings required in the embodiments. Apparently, the accompanying drawings in the following description show merely some embodiments of the present invention, and a skilled person in the art may still derive other drawings from these accompanying drawings without creative efforts.
FIG. 1 to FIG. 5 are flowcharts of several retransmission control methods according to embodiments of the present invention;
FIG. 6 is a structural diagram of a MAC entity of a base station according to an embodiment of the present invention;
FIG. 7 is a structural diagram of an RLC entity of a base station according to an embodiment of the present invention; and
FIG. 8 to FIG. 9 are structural diagrams of two communications systems according to embodiments of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a skilled person in the art based on the embodiments of the present invention without creative efforts shall fall within the protection scope of the present invention.

The embodiments of the present invention provide a retransmission control method, a communications system, and a device, which can save air interface resources of the system. The embodiments of the present invention are applicable to multiple types of communications systems, and are specifically applicable to multiple types of base stations, especially base stations including a MAC entity and an RLC entity. System and device examples used for describing in detail the retransmission control method in the following embodiments shall not be construed as a limitation to the present invention.

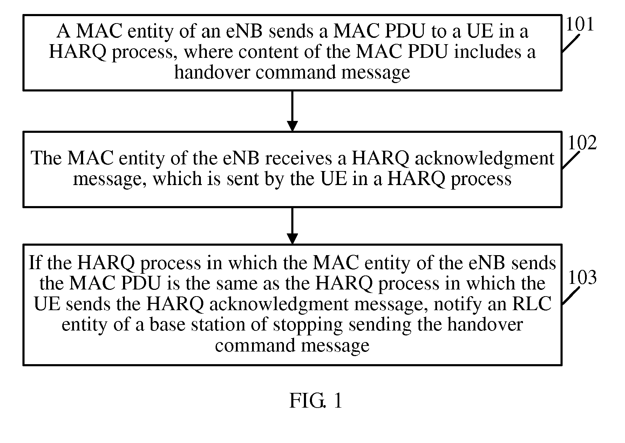

An embodiment of the present invention provides a retransmission control method, and steps in this embodiment may be performed by a MAC entity of an eNB. As shown in FIG. 1, this embodiment includes the following steps:

101: A MAC entity of an eNB sends a MAC PDU to a UE in a HARQ process, where content of the MAC PDU includes a handover command message.

102: The MAC entity of the eNB receives a HARQ acknowledgment message, which is sent by the UE in a HARQ process.

103: If the HARQ process in which the MAC entity of the eNB sends the MAC PDU is the same as the HARQ process in which the UE sends the HARQ acknowledgment message, notify an RLC entity of a base station of stopping sending the handover command message.

As an optional implementation manner, in the embodiment described in FIG. 1, before sending the MAC PDU to the UE in the HARQ process, the MAC entity of the eNB may further receive the handover command message sent by the RLC entity of the eNB and encapsulates the handover command message into the MAC PDU.

A specific implementation process of encapsulating, by the MAC entity of the eNB, the handover command message into the MAC PDU and a specific form of the MAC PDU are known by a skilled person in the art, and are not described in the embodiment of the present invention.

As an optional implementation manner, the receiving, by the MAC entity of the eNB, the handover command message sent by the RLC entity of the eNB may specifically include:
receiving, by the MAC entity of the eNB, a first identifier and an RLC PDU that are sent by the RLC entity of the eNB, where the first identifier is used to indicate that content of the RLC PDU includes a handover command message.

As an optional implementation manner, in the embodiment described in FIG. 1, before step 103, for example, when performing step 101 or during a period of time between step 101 and step 103, the MAC entity of the eNB may further record the HARQ process in which the MAC PDU is sent. In this way, the MAC entity of the eNB can conveniently determine, based on comparison, whether the HARQ process in which the MAC PDU is sent is the same as the HARQ process in which the UE sends the HARQ acknowledgment message, and when a comparison result shows that they are the same, notify the RLC entity of the eNB of stopping sending the handover command message.

As an optional implementation manner, the notifying, by the MAC entity of the eNB, an RLC entity of the eNB of stopping sending the handover command message in step 103 may specifically be: sending, by the MAC entity of the eNB, a first notification message to the RLC entity of the eNB, where the first notification message is used to instruct the RLC entity of the eNB to stop sending the handover command message.

In the embodiment described in FIG. 1, after determining that the HARQ process in which the MAC PDU is sent is the same as the HARQ process in which the UE sends the HARQ acknowledgment message, the MAC entity of the eNB notifies the RLC entity of the eNB of stopping sending the handover command message, so that the RLC entity of the eNB can stop ARQ retransmission. In the embodiment described in FIG. 1, ARQ retransmission between the RLC entity of the eNB and the MAC entity of the eNB can be reduced, so that HARQ retransmission between the MAC entity of the eNB and a MAC entity of the UE, which is caused by the ARQ retransmission, can be reduced, and thereby air interface resources of a system are effectively saved.

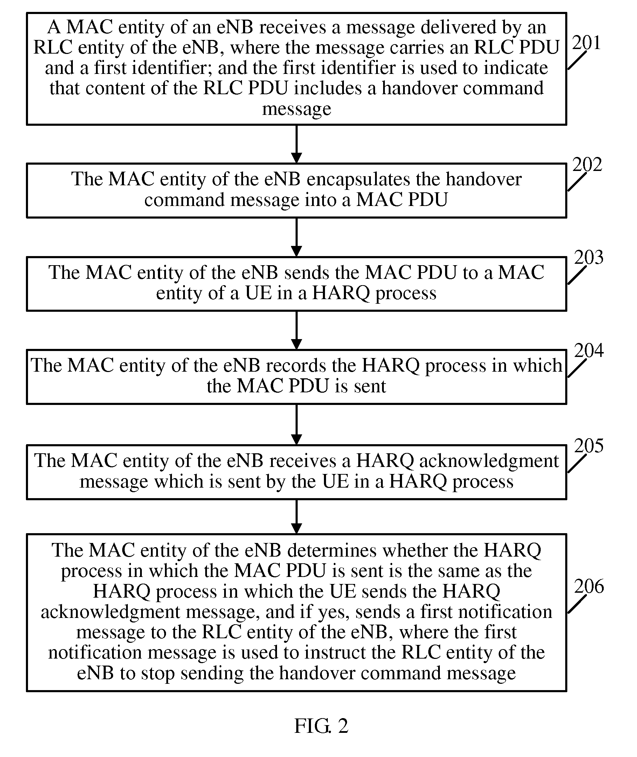

Another embodiment of the present invention provides a retransmission control method, and this embodiment is described by using a MAC entity of an eNB in an LTE system as an example. As shown in FIG. 2, this embodiment includes the following steps:

201: A MAC entity of an eNB receives a message delivered by an RLC entity of the eNB, where the message carries an RLC PDU and a first identifier; and the first identifier is used to indicate that content of the RLC PDU includes a handover command message.

In an embodiment, the MAC entity of the eNB may receive a message sent by the RLC entity of the eNB by invoking a function. The first identifier may occupy a field for an entry parameter of the invoked function. In this way, the first identifier may be easily carried.
202: The MAC entity of the eNB encapsulates the handover command message into a MAC PDU.
203: The MAC entity of the eNB sends the MAC PDU to a MAC entity of a UE in a HARQ process.
204: The MAC entity of the eNB records the HARQ process in which the MAC PDU is sent.

In the embodiment of the present invention, a sequence for performing step 203 and step 204 by the MAC entity of the eNB is not limited.
205: The MAC entity of the eNB receives a HARQ acknowledgment message which is sent by the UE in a HARQ process.
206: The MAC entity of the eNB determines whether the HARQ process in which the MAC PDU is sent is the same as the HARQ process in which the UE sends the HARQ acknowledgment message, and if yes, sends a first notification message to the RLC entity of the eNB, where the first notification message is used to instruct the RLC entity of the eNB to stop sending the handover command message.

After receiving the first notification message sent by the MAC entity of the eNB, the RLC entity of the eNB can learn that the handover command message is received successfully by the UE. The RLC entity of the eNB may stop sending the handover command message to stop ARQ retransmission, so as to reduce ARQ retransmission between the RLC entity of the eNB and the MAC entity of the eNB and HARQ retransmission between the MAC entity of the eNB and the MAC entity of the UE which is caused by the ARQ retransmission, thereby effectively saving air interface resources of a system.

It should be noted that in this embodiment, if the MAC entity of the eNB determines, after step 205, that the HARQ process in which the MAC PDU is sent is different from the HARQ process in which the UE sends the HARQ acknowledgment message, the MAC entity of the eNB learns that the HARQ process in which the UE sends the HARQ acknowledgment message is not the HARQ process in which the MAC PDU is sent in step 203. As a result, the MAC entity of the eNB cannot determine whether the MAC PDU which is sent in the HARQ process in step 203 and includes the handover command message is received successfully by the UE. In this case, the MAC entity of the eNB no longer sends the first notification message to the RLC entity of the eNB, and the RLC entity of the eNB continues to send the handover command message, namely, performing ARQ retransmission, so as to ensure that the handover command message can be received successfully by the UE.

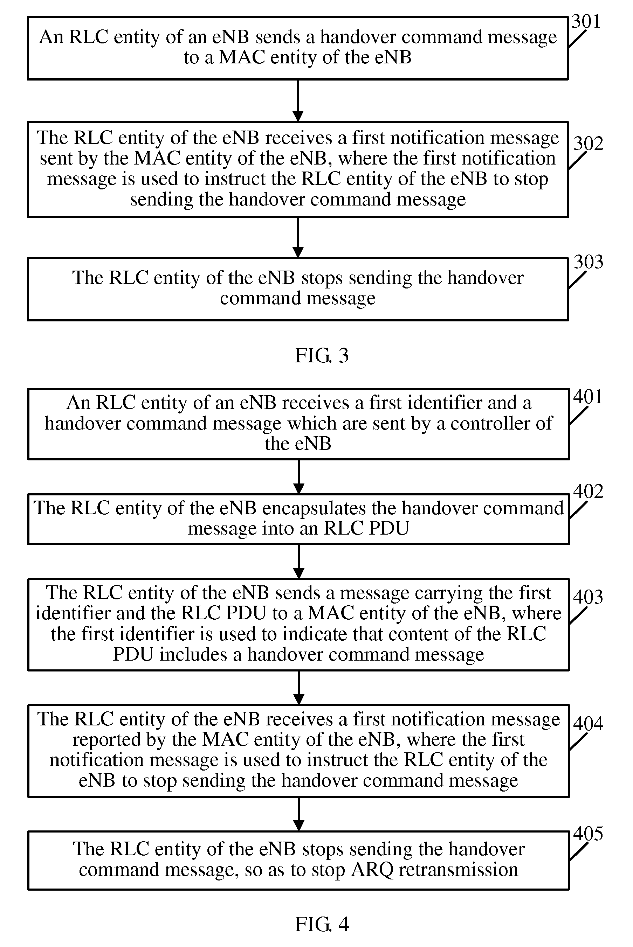

Another embodiment of the present invention provides a retransmission control method, and this embodiment is described by using an RLC entity of an eNB in an LTE system as an example. As shown in FIG. 3, this embodiment includes the following steps:
301: An RLC entity of an eNB sends a handover command message to a MAC entity of the eNB.
302: The RLC entity of the eNB receives a first notification message sent by the MAC entity of the eNB, where the first notification message is used to instruct the RLC entity of the eNB to stop sending the handover command message.
303: The RLC entity of the eNB stops sending the handover command message.

As an optional implementation manner, in the embodiment described in FIG. 3, the sending, by an RLC entity of an eNB, a handover command message to a MAC entity of the eNB in step 301 may specifically be: sending, by the RLC entity of the eNB, a first identifier and an RLC PDU to the MAC entity of the eNB, where the first identifier is used to indicate that content of the RLC PDU includes a handover command message.

As an optional implementation manner, in the embodiment described in FIG. 3, before step 301, the RLC entity of the eNB may further receive the first identifier and the handover command message that are sent by a controller of the eNB, and the RLC entity of the eNB encapsulates the handover command message into the RLC PDU. Optionally, the controller of the eNB, similar to the MAC entity and RLC entity of the eNB, is an entity in the eNB.

In the embodiment described in FIG. 3, after sending the handover command message to the MAC entity of the eNB, if receiving the first notification message sent by the MAC entity of the eNB, the RLC entity of the eNB stops sending the handover command message. In this way, the RLC entity of the eNB can stop ARQ retransmission and reduce HARQ retransmission between the MAC entity of the eNB and a MAC entity of a UE, which is caused by the ARQ retransmission, thereby effectively saving air interface resources of a system.

Another embodiment of the present invention provides a retransmission control method, and this embodiment is described by using an RLC entity of an eNB in an LTE system as an example. As shown in FIG. 4, this embodiment includes the following steps:
401: An RLC entity of an eNB receives a first identifier and a handover command message that are sent by a controller of the eNB.
402: The RLC entity of the eNB encapsulates the handover command message into an RLC PDU.
403: The RLC entity of the eNB sends a message carrying the first identifier and the RLC PDU to a MAC entity of the eNB, where the first identifier is used to indicate that content of the RLC PDU includes a handover command message.

Optionally, in this embodiment, the RLC entity of the eNB may add the first identifier and the RLC PDU to one message, and sends the message to the MAC entity of the eNB by invoking a function, where the first identifier may occupy a field for an entry parameter of the invoked function.
404: The RLC entity of the eNB receives a first notification message reported by the MAC entity of the eNB, where the first notification message is used to instruct the RLC entity of the eNB to stop sending the handover command message.
405: The RLC entity of the eNB stops sending the handover command message, so as to stop ARQ retransmission.

After receiving the first notification message sent by the MAC entity of the eNB, the RLC entity of the eNB learns that the handover command message is received successfully by the UE, and in this case, the RLC entity of the eNB may stop sending the handover command message to stop ARQ retransmission.

It should be noted that if the RLC entity of the eNB does not receive the first notification message sent by the MAC entity of the eNB, the RLC entity of the eNB may continue to send the handover command message, that is, continue to perform ARQ retransmission, so as to ensure that the handover command message can be received successfully by the UE.

In the embodiment described in FIG. 4, after sending the handover command message to the MAC entity of the eNB, if receiving the first notification message sent by the MAC entity of the eNB, the RLC entity of the eNB in the LTE system stops sending the handover command message. In this way, the RLC entity of the eNB can stop ARQ retransmission and reduce HARQ retransmission between the MAC entity of the eNB and a MAC entity of the UE, which is caused by the ARQ retransmission, thereby effectively saving air interface resources of the LTE system.

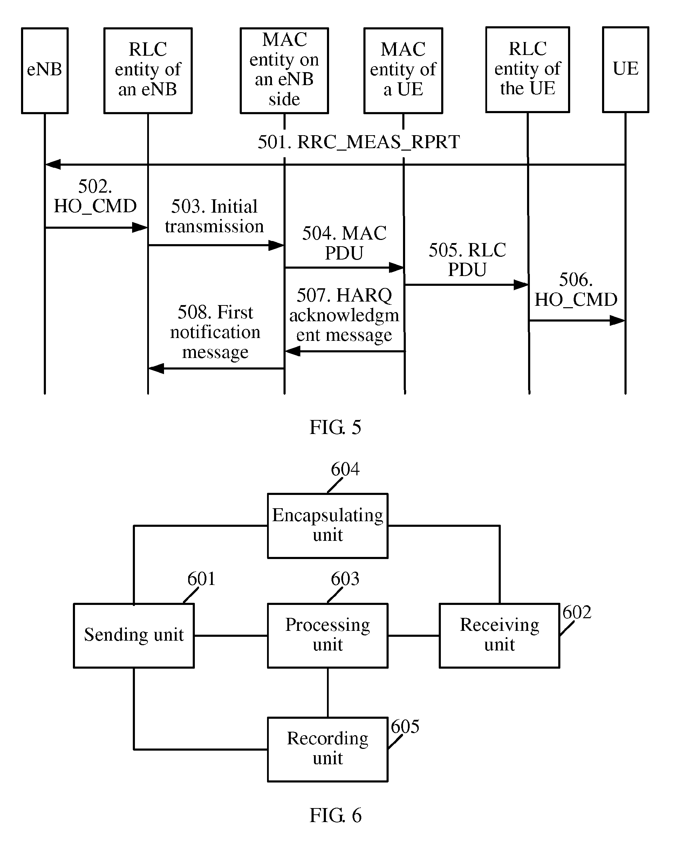

To better describe a retransmission control method provided in another embodiment of the present invention, the embodiment is described from the perspectives of an eNB and a UE in an LTE system with reference to FIG. 5. This embodiment may include the following steps:
501: A UE sends a measurement report (RRC_MEAS_RPRT) to an eNB of a serving cell, so as to trigger the eNB to start a UE handover, where the measurement report indicates that signal strength of a target cell is better than signal strength of the serving cell.
502: A controller of the eNB sends a first identifier and a handover command message (HO_CMD) to an RLC entity of the eNB.
503: The RLC entity of the eNB encapsulates the handover command message into an RLC PDU, and sends a message carrying the first identifier and the RLC PDU to an MAC entity of the eNB (where this process is also referred to as initial transmission), where the first identifier is used to indicate that content of the RLC PDU includes a handover command message.
504: The MAC entity of the eNB receives the message sent by the RLC entity of the eNB, encapsulates the handover command message into a MAC PDU, and sends the MAC PDU to a MAC entity of the UE in a HARQ process.

Optionally, the MAC entity of the eNB may further record the HARQ process in which the MAC PDU is sent.
505: The MAC entity of the UE decapsulates the MAC PDU into the RLC PDU, sends the RLC PDU to an RLC entity of the UE, and sends a first notification message to the MAC entity of the eNB in the HARQ process.
506: The RLC entity of the UE decapsulates the RLC PDU into the handover command message and sends the handover command message to the UE, and the UE is triggered to initiate a random access request to the target cell.
507: The MAC entity of the eNB receives a HARQ ACK message, which is sent by the MAC entity of the UE in the HARQ process, determines that the recorded HARQ process is the same as the HARQ process in which the UE sends the HARQ acknowledgment message, and sends a first notification message to the RLC entity of the eNB to instruct the RLC entity of the eNB to stop sending the handover command message.

In the embodiment of the present invention, a sequence of step 506 and step 507 is not limited.
508: The RLC entity of the eNB receives the first notification message reported by the MAC entity of the eNB and stops sending the handover command message to stop ARQ retransmission.

In the embodiment described in FIG. 5, ARQ retransmission between the RLC entity of the eNB and the MAC entity of the eNB can be reduced, so that HARQ retransmission between the MAC entity of the eNB and the MAC entity of the UE, which is caused by the ARQ retransmission, can be reduced, and thereby air interface resources of the LTE system are effectively saved.

An embodiment of the present invention further provides a base station, where the base station includes a MAC entity and an RLC entity. As shown in FIG. 6, the MAC entity includes a sending unit 601, a receiving unit 602, and a processing unit 603. The sending unit 601 is configured to send a MAC PDU to a UE in a HARQ process, where content of the MAC PDU includes a handover command message. The receiving unit 602 is configured to receive a HARQ acknowledgment message which is sent by the UE in a HARQ process. The processing unit 603 is configured to: when the HARQ process in which the MAC PDU is sent is the same as the HARQ process in which the UE sends the HARQ acknowledgment message, trigger the sending unit 601 to notify the RLC entity of stopping sending the handover command message. The sending unit 601 is further configured to: when triggered by the processing unit 603, notify the RLC entity of stopping sending the handover command message.

As an optional implementation manner, in the MAC entity shown in FIG. 6, the receiving unit 601 is further configured to receive the handover command message sent by the RLC entity. Correspondingly, as shown in FIG. 6, the MAC entity may further include an encapsulating unit 604, where the encapsulating unit 604 is configured to encapsulate the handover command message received by the receiving unit 601 into the MAC PDU.

As an optional implementation manner, the receiving unit 601 may receive a message sent by the RLC entity of the base station, where the message carries a first identifier and an RLC PDU; and the first identifier is used to indicate that content of the RLC PDU includes a handover command message. In this way, the receiving unit 601 may receive the handover command message sent by the RLC entity.

As an optional implementation manner, in the MAC entity shown in FIG. 6, the MAC entity may further include a recording unit 605, configured to record the HARQ process in which the sending unit 601 sends the MAC PDU.

As an optional implementation manner, in the MAC entity shown in FIG. 6, when triggered by the processing 603, the sending unit 601 may send a first notification message to the RLC entity, where the first notification message is used to instruct the RLC entity to stop sending the handover command message.

Optionally, the base station provided in this embodiment is an eNB.

In the MAC entity of the base station shown in FIG. 6, when the HARQ process in which the MAC PDU is sent is the same as the HARQ process in which the UE sends the HARQ acknowledgment message, the processing unit 603 triggers the sending unit 601 to notify the RLC entity of stopping sending the handover command message, so that the RLC entity of the base station can stop ARQ retransmission. The MAC entity of the base station shown in FIG. 6 can reduce ARQ retransmission between the RLC entity of the base station and the MAC entity of the base station, and therefore reduce HARQ retransmission between the MAC entity of the base station and a MAC entity of the UE, which is caused by the ARQ retransmission, thereby effectively saving air interface resources of a system.

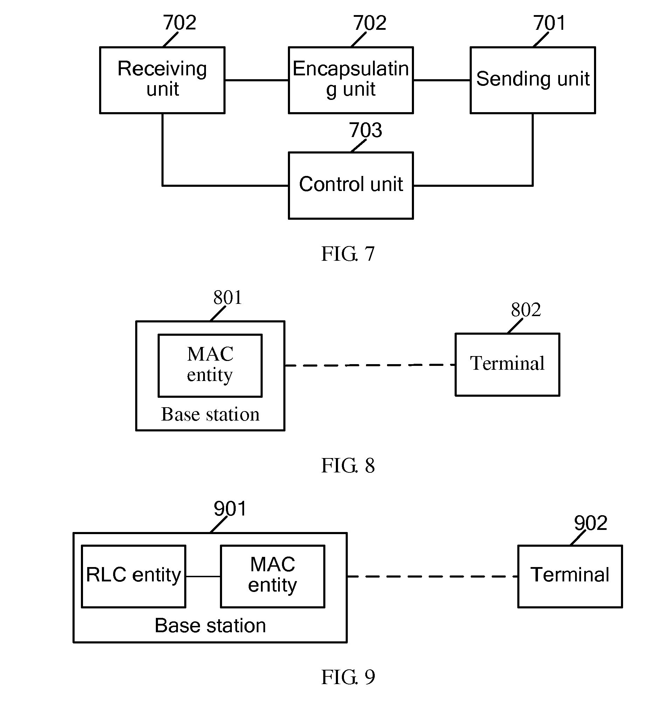

Another embodiment of the present invention provides a base station, where the base station includes a MAC entity and an RLC entity. As shown in FIG. 7, the RLC entity may include a sending unit 701, a receiving unit 702, and a control unit 703. The sending unit 701 is configured to send a handover command message to the MAC entity. The receiving unit 702 is configured to receive a first notification message sent by the MAC entity, where the first notification message is used to instruct the RLC entity to stop sending the handover command message. The control unit 703 is configured to: when the receiving unit 702 receives the first notification message, control the sending unit 701 to stop sending the handover command message.

As an optional implementation manner, the sending unit 701 may send a message to the MAC entity, where the message carries a first identifier and an RLC PDU to the MAC entity, and the first identifier is used to indicate that content of the RLC PDU includes a handover command message. In this way, the sending unit 701 may send the handover command message to the MAC entity.

As an optional implementation manner, the receiving unit 702 is further configured to receive the first identifier and the handover command message that are sent by a controller of the base station. Correspondingly, in the RLC entity shown in FIG. 7, the RLC entity may further include an encapsulating unit 704, where the encapsulating unit 704 is configured to encapsulate the handover command message into the RLC PDU.

Optionally, the base station provided in this embodiment is an eNB.

In the RLC entity of the base station shown in FIG. 7, after the sending unit 701 sends the handover command message to the MAC entity of the base station, if the receiving unit 702 receives the first notification message sent by the MAC entity of the base station, the control unit 703 controls the sending unit 701 to stop sending the handover command message. In this way, the RLC entity of the eNB can stop ARQ retransmission and reduce HARQ retransmission between the MAC entity of the eNB and a MAC entity of a UE, which is caused by the ARQ retransmission, thereby effectively saving air interface resources of a system.

An embodiment of the present invention provides a communications system. As shown in FIG. 8, the communications system may include a base station 801 and a terminal 802. A MAC entity of the base station 801 is configured to send a MAC PDU to the terminal 802 in a HARQ process, where content of the MAC PDU includes a handover command message; receive a HARQ acknowledgment message sent by the terminal 802 in a HARQ process; and when the HARQ process in which the MAC PDU is sent is the same as the HARQ process in which the terminal 802 sends the HARQ acknowledgment message, notify an RLC entity of the base station 801 of stopping sending the handover command message.

Optionally, reference may be made to detailed descriptions in the foregoing embodiments for a structure of the MAC entity of the base station 801 shown in FIG. 8, which is not described again in this embodiment.

Optionally, the MAC entity of the terminal 802 may decapsulate the MAC PDU into an RLC PDU and send the RLC PDU to an RLC entity of the terminal 802, and send the HARQ acknowledgment message to the MAC entity of the base station 801 in the HARQ process. After the RLC entity of the terminal 802 decapsulates the RLC PDU into the handover command message, the terminal 802 may trigger a handover to a target cell.

Another embodiment of the present invention provides a communications system. As shown in FIG. 9, the communications system may include a base station 901 and a terminal 902. An RLC entity of the base station 901 is configured to send a handover command message to a MAC entity of the base station 901; receive a first notification message sent by the MAC entity of the base station 901, where the first notification message is used to instruct the RLC entity to stop sending the handover command message; and stop sending the handover command message.

Optionally, reference may be made to detailed descriptions in the foregoing embodiments for structures of the MAC entity and the RLC entity of the base station 901 shown in FIG. 9, which are not described again in this embodiment.

Optionally, the base station in the communications system shown in FIG. 8 and FIG. 9 may be an eNB.

The communications system can reduce ARQ retransmission between the RLC entity of the base station and the MAC entity of the base station, and HARQ retransmission between the MAC entity of the base station and a MAC entity of a UE, which is caused by the ARQ retransmission, thereby effectively saving air interface resources of a system.

The retransmission control method, communications system, and device provided in the embodiments of the present invention are applicable to systems, such as LTE and LTE-A. A dashed line indicates that the base station and the terminal are connected in a wireless manner.

A skilled person in the art may understand that all or a part of the steps of the methods in the embodiments may be implemented by a program instructing relevant hardware. The program may be stored in a computer readable storage medium. The storage medium may include: a flash memory, a read-only memory (Read-Only Memory, ROM), a random access memory (Random Access Memory, RAM), a magnetic disk, or an optical disc.

The retransmission control method, communications system, and device provided by the embodiments of the present invention are described in detail in the foregoing. Although the principles and implementation manners of the present invention are described by using specific examples in this specification, the descriptions of the embodiments are merely intended to help understand the method and core ideas of the present invention. Meanwhile, a skilled person in the art may make modifications to the specific implementation manners and application scopes according to the ideas of the present invention. To conclude, the content of the specification should not be construed as a limitation to the present invention.

## Claims

1. A retransmission control method, comprising:
sending, by a media access control entity of a base station, a media access control protocol data unit to a terminal in a hybrid automatic repeat request process, wherein content of the media access control protocol data unit comprises a handover command message;
receiving, by the media access control entity of the base station, a hybrid automatic repeat request acknowledgment message, which is sent by the terminal in a hybrid automatic repeat request process; and
if the hybrid automatic repeat request process in which the media access control entity of the base station sends the media access control protocol data unit is the same as the hybrid automatic repeat request process in which the terminal sends the hybrid automatic repeat request acknowledgment message, notifying a radio link control entity of the base station of stopping sending the handover command message.

2. The retransmission control method according to claim 1, wherein before the sending, by a media access control entity of a base station, a media access control protocol data unit to a terminal in a hybrid automatic repeat request process, the method further comprises:
receiving, by the media access control entity of the base station, the handover command message sent by the radio link control entity of the base station; and
encapsulating, by the media access control entity of the base station, the handover command message into the media access control protocol data unit.

3. The retransmission control method according to claim 2, wherein the receiving, by the media access control entity of the base station, the handover command message sent by the radio link control entity of the base station comprises:
receiving, by the media access control entity of the base station, a first identifier and a radio link control protocol data unit that are sent by the radio link control entity of the base station, wherein the first identifier is used to indicate that content of the radio link control protocol data unit comprises a handover command message.

4. The retransmission control method according to any one of claims 1 to 3, wherein the method further comprises:
recording, by the media access control entity of the base station, the hybrid automatic repeat request process in which the media access control protocol data unit is sent.

5. The retransmission control method according to any one of claims 1 to 4, wherein the notifying a radio link control entity of the base station of stopping sending the handover command message comprises:
sending, by the media access control entity of the base station, a first notification message to the radio link control entity of the base station, wherein the first notification message is used to instruct the radio link control entity of the base station to stop sending the handover command message.

6. A retransmission control method, comprising:
sending, by a radio link control entity of a base station, a handover command message to a media access control entity of the base station;
receiving, by the radio link control entity of the base station, a first notification message sent by the media access control entity of the base station, wherein the first notification message is used to instruct the radio link control entity of the base station to stop sending the handover command message; and
stopping, by the radio link control entity of the base station, sending the handover command message.

7. The retransmission control method according to claim 6, wherein the sending, by a radio link control entity of a base station, a handover command message to a media access control entity of the base station comprises:
sending, by the radio link control entity of the base station, a first identifier and a radio link control protocol data unit to the media access control entity of the base station, wherein the first identifier is used to indicate that content of the radio link control protocol data unit comprises a handover command message.

8. The retransmission control method according to claim 7, wherein before the sending, by the radio link control entity of the base station, a first identifier and a radio link control protocol data unit to the media access control entity of the base station, the method further comprises:
receiving, by the radio link control entity of the base station, the first identifier and the handover command message that are sent by a controller of the base station; and
encapsulating, by the radio link control entity of the base station, the handover command message into the radio link control protocol data unit.

9. A base station, wherein the base station comprises a media access control entity and a radio link control entity, and the media access control entity comprises:
a sending unit, configured to send a media access control protocol data unit to a terminal in a hybrid automatic repeat request process, wherein content of the media access control protocol data unit comprises a handover command message;
a receiving unit, configured to receive a hybrid automatic repeat request acknowledgment message, which is sent by the terminal in a hybrid automatic repeat request process; and
a processing unit, configured to: when the hybrid automatic repeat request process in which the media access control protocol data unit is sent is the same as the hybrid automatic repeat request process in which the terminal sends the hybrid automatic repeat request acknowledgment message, trigger the sending unit to notify the radio link control entity of stopping sending the handover command message; wherein
the sending unit is further configured to: when triggered by the processing unit, notify the radio link control entity of stopping sending the handover command message.

10. The base station according to claim 9, wherein
the receiving unit is further configured to receive the handover command message sent by the radio link control entity; and
the media access control entity further comprises: an encapsulating unit, configured to encapsulate the handover command message received by the receiving unit into the media access control protocol data unit.

11. The base station according to claim 10, wherein the receiving unit is specifically configured to receive a message sent by the radio link control entity of the base station, wherein the message carries a first identifier and a radio link control protocol data unit; and the first identifier is used to indicate that content of the radio link control protocol data unit comprises a handover command message.

12. The base station according to any one of claims 9 to 11, wherein the media access control entity further comprises:
a recording unit, configured to record the hybrid automatic repeat request process in which the sending unit sends the media access control protocol data unit.

13. The base station according to any one of claims 9 to 12, wherein the sending unit is specifically configured to send a first notification message to the radio link control entity when triggered by the processing unit, wherein the first notification message is used to instruct the radio link control entity to stop sending the handover command message.

14. A base station, comprising a media access control entity and a radio link control entity, wherein the radio link control entity comprises:
a sending unit, configured to send a handover command message to the media access control entity;
a receiving unit, configured to receive a first notification message sent by the media access control entity, wherein the first notification message is used to instruct the radio link control entity to stop sending the handover command message; and
a control unit, configured to: when the receiving unit receives the first notification message, control the sending unit to stop sending the handover command message.

15. The base station according to claim 14, wherein the sending unit is specifically configured to send a message to the media access control entity, and the message carries a first identifier and a radio link control protocol data unit to the media access control entity, and the first identifier is used to indicate that content of the radio link control protocol data unit comprises a handover command message.

16. The base station according to claim 15, wherein
the receiving unit is further configured to receive the first identifier and the handover command message that are sent by a controller of the base station; and
the radio link control entity further comprises: an encapsulating unit, configured to encapsulate the handover command message into the radio link control protocol data unit.

17. A communications system, comprising a base station and a terminal, wherein a media access control entity of the base station is configured to send a media access control protocol data unit to the terminal in a hybrid automatic repeat request process, wherein content of the media access control protocol data unit comprises a handover command message; receive a hybrid automatic repeat request acknowledgment message, which is sent by the terminal in a hybrid automatic repeat request process; and if the hybrid automatic repeat request process in which the media access control protocol data unit is sent is the same as the hybrid automatic repeat request process in which the terminal sends the hybrid automatic repeat request acknowledgment message, notify a radio link control entity of the base station of stopping sending the handover command message.

18. A communications system, comprising a base station and a terminal, wherein a radio link control entity of the base station is configured to send a handover command message to a media access control entity of the base station; receive a first notification message sent by the media access control entity of the base station, wherein the first notification message is used to instruct the radio link control entity to stop sending the handover command message; and stop sending the handover command message.
